# EUROPEAN PATENT SPECIFICATION

(11) **EP 1 446 603 B1**
(45) Date of publication and mention of the grant of the patent: **09.01.2008**
(21) Application number: 02803337.1
(22) Date of filing: 19.11.2002
(51) Int. Cl.: F16L 11/16

(54) **A FLEXIBLE PIPE WITH A TENSILE REINFORCEMENT**
FLEXIBLES ROHR MIT ZUGBEWEHRUNG
CONDUITE FLEXIBLE A ARMATURE DE TRACTION

(30) Priority: 19.11.2001 DK 200101723
(43) Date of publication of application: 18.08.2004
(73) Proprietor: NKT Flexibles I/S, 2605 Brondby (DK)
(72) Inventor: GLEJBOL, Kristian, DK-2600 Glostrup (DK)
(74) Representative: Hegner, Anette
(86) International application number: PCT/DK2002/000778
(87) International publication number: WO 2003/044414

(56) References cited:
- WO-A-01/61232
- US-A- 4 898 212
- US-A- 5 275 209
- US-A- 6 085 799
- US-A1- 2001 003 992

## Description

The invention relates to a flexible pipe, such as a reinforced flexible pipe of the type which is adapted to transport fluids between installations above and/or below sea level. The pipe comprises a tensile reinforcement comprising at least a layer of tensile reinforcement elements.

Tensile reinforcements for flexible pipes of the above-mentioned type are known from several publications, including e.g. WO 00/36324 or WO 98/57085.

Such pipes often comprise a so-called carcass, whose outer side has arranged thereon an inner liner which in turn is surrounded by at least one, but frequently several outer reinforcement layers which impart resistance to the liner against an increase in the volume spanned by it.

The liner may thus during layout and operation change its volume either as a consequence of the outer (e.g. hydrostatic) pressure or the inner pressure in the pipe, and/or as a consequence of tensile forces in the longitudinal direction of the pipe.

The reinforcement layer or layers may thus be dimensioned to absorb compressive and/or tensile forces.

One or more layers may be provided between the reinforcement layers or externally on these, whose function may be to impart thermal resistance to the pipe, so that exchange of thermal energy between the fluid transported in the pipe and the surroundings of the pipe is reduced.

Another possible function may be to prevent migration of material inwards between the reinforcement elements.

A third possibility is that the layers may absorb instantaneous hoop stresses in the liner material as a consequence of non-stationary operating conditions.

Finally, the outer reinforcement layer may have arranged thereon an outer jacket whose purpose among other things is to protect the outer reinforcement layer against mechanical damage which may occur because of impact loads.

This outer jacket may moreover be tight or permeable to external fluids, depending on the structure of the pipe.

Apart from the armouring or reinforcing layers, the layers described above are not essential to the mechanical integrity of the pipe, and will therefore not be described more fully below.

It should be noted that the liner and the reinforcement layers of the above-mentioned prior art flexible pipes are not chemically bonded to each other, which ensures the flexibility of the pipe. Such pipes are also called "unbonded" in the literature.

The above-mentioned type of pipes is primarily used for the transport of oil and gas at various depths e.g. for the transport between offshore installations.

In the pipes known from the above-mentioned WO publications, the reinforcement layers consist of solid tensile reinforcement elements, e.g. of steel, which are twisted or wound around the longitudinal axis of the pipe, where the reinforcement layers that absorb pressure are twisted at a great angle relative to the longitudinal axis of the pipe and mutually kept together by profiles, while the reinforcement layers that absorb tension are twisted or wound at a somewhat smaller angle relative to the longitudinal axis of the pipe, such as about 55°.

On such a pipe, it is particularly the outermost reinforcement layer, which is a tensile reinforcement layer, which is subjected to mechanical Impacts from blows and the like that can damage the pipe, since blows against the solid reinforcement elements may cause rupture of these. In addition, there is a limit as to how thick these reinforcement elements may be allowed to be owing to the flexibility of the pipe.

US Patent Application No. 2001/0003992 describes a one-piece subsea flexible multilayer tubular pipe comprising a carcass made of interlocked metal strip, an inner sealing sheath made of a polymer material, a winding of an interlocked metal element wound in a helix with a short pitch, at least one ply of tensile armor layers wound with a long pitch around the pressure vault, where appropriate at least one thermal insulation layer and an outer protective sealing sheath.

US-6,165,586 deals with a flexible flat strip and its use in a flexible duct. The flexible strip comprises 1) a layer of filamentary rovings arranged in a substantially rectangular cross section, 2) retaining means for surrounding and clamping the layer of rovings and 3) a binding material to bind the retaining means to the layer. The filamentary rovings may e.g. consist of a set or group of continuous threads twisted or not twisted together, each thread being capable of being a monofilament or a set of continuous or discontinuous fibres or filaments assembled, in particular, by twisting or spinning. A flexible duct comprising two superposed reinforcement layers using such a strip helically wound around the preceding layer is described.

The presence of retaining means and binding material in the armouring wire or strip used for winding a reinforcement layer decreases the fraction of the cross section of the armouring wire or strip that contributes to its tensile strength.

It is an object of the invention to construct a flexible pipe with a reinforcement element, which pipe is more resistant to mechanical impacts and may also be given a sufficient strength and flexibility.

It is another object of the invention is to provide a flexible pipe that is simple to manufacture compared to the prior art.

These and other objects are achieved by the invention as defined in the claims, and as will be explained more fully below.

The invention thus relates to a flexible pipe for use in the transport of fluids between installations above and/or below sea level. The pipe comprises a tensile reinforcement having at least one tensile reinforcement layer. At least one of the tensile reinforcement layers comprises one or more tensile reinforcement elements, and at least one of said tensile reinforcement elements consists of compound filaments, said tensile reinforcement element or elements being wound around the pipe to form part of said tensile reinforcement layer.

The term 'compound filaments' is in the present context taken to mean filaments in the form of threads or wires or fibres held together in that these threads or wires or fibres are woven, twisted, spun or entangled in each other to form threads.

In an embodiment of the invention, the tensile reinforcement of a flexible pipe for use in the transport of fluids comprises two or more tensile reinforcement layers, wherein at least one of the tensile reinforcement layers is made of one or preferably more tensile reinforcement elements consisting of filaments in the form of threads or wires held together in that these threads or wires are woven, twisted, spun or entangled in each other to form threads which constitute the tensile reinforcement elements, said tensile reinforcement element/elements being wound around the pipe to form a tensile reinforcement layer.

The tensile reinforcement may have several tensile reinforcement layers, such as 2, 3, 4, 5 or more. The tensile reinforcement layers are preferably not bonded to each other, so that the individual tensile reinforcement layers may be displaced relative to each other when the pipe is bent, e.g. when it is wound on a transport drum or reel. In addition, it is clear that the flexibility of a spin-built tensile reinforcement layer is somewhat greater than if solid elements are involved.

At least one of the tensile reinforcement layers and preferably more or all of the layers are made of one or preferably more tensile reinforcement elements in the form of filaments held together, preferably compound filaments. Since the individual tensile reinforcement elements are formed by filaments held together, they will be able to better resist external mechanical impacts, thus eliminating the risk of through-going cuts. The filaments are preferably held together in that they are physically woven, twisted, spun or entangled in each other to form threads.

In a preferred embodiment, no binding means (such as glue or thermoplastic, etc.) are used to hold the filaments together. In another preferred embodiment, no retaining means (such as a sheath or a thread or a tape, etc.) surrounding some or all of the individual filaments of a reinforcement element are used. Both of these embodiments provide a simplified manufacture of the flexible pipe, making it more compact (for a given tensile strength) and potentially decreasing its cost.

In an embodiment of the invention, each of the filaments in a tensile reinforcement layer intersects at least one of the other elements for each longitudinal unit of the filament corresponding to 50-500 times the diameter of the filament, preferably for each longitudinal unit of the filament corresponding to 10-100 times the diameter of the filament. The filaments are preferably in the form of threads or wires or continuous or discontinuous fibres, and in principle they may have any thickness, the number of filaments in the individual tensile reinforcement layer being adapted relative to the thickness of the filaments. The filaments may e.g. have a diameter of between 0.001 and 10 mm, such as between 0.01 and 10 mm, such as between 0.5 and 3 mm, such as between 0.01 and 2 mm, and the number of filaments per tensile reinforcement element may e.g. be between 10 and 5000, such as between 50 and 500 or alternatively between 100 (e.g. steel wire) and 5 000 000 (e.g. conventional rope).

The tensile reinforcement element or elements are wound or twisted around the pipe to form a tensile reinforcement layer.

In an embodiment of the invention where all the tensile reinforcement layers are made of tensile reinforcement elements consisting of filaments held together, the tensile reinforcement layers are wound around the pipe to form independent tensile reinforcement layers. The winding angle may advantageously be different from layer to layer.

However, it is preferred that the reinforcement element/elements are wound (e.g. in pairs) around the flexible pipe at an angle relative to the axis of the flexible pipe which is substantially identical in all windings. This makes it relatively easy to dimension the tensile reinforcement elements of existing flexible pipes to those identified according to the invention. The expression "substantially identical" means in this connection that the angle from one winding to another winding is within 10 degrees, preferably within 5 degrees and in particular within 3 degrees.

In another embodiment of the invention including at least one tensile reinforcement layer which comprises several tensile reinforcement elements, these tensile reinforcement elements are mechanically locked to each other, which may take place e.g. by weaving one or preferably more of the filaments from one reinforcement element into one or preferably more filaments from another reinforcement element into each other, as is known from ropes and cords. In this connection it is important to note that it is preferred that in the case where two reinforcement elements of a reinforcement layer fully cross each other, i.e. where all the filaments from one reinforcement element intersect all the filaments from another reinforcement element from the same reinforcement layer, there is an internal interweaving of the two reinforcement elements. The interweaving of two fully crossing reinforcement elements may in a preferred embodiment take the form of an interweaving of the whole of the reinforcement elements with each other (i.e. in a crossing, all filaments of a first reinforcement element cross above (or alternatively all below) all filaments of a second reinforcement element). In an embodiment of the invention, a crossing between two reinforcement elements of a reinforcement layer is characterized in that a fraction (e.g. approximately half) of the filaments of a first reinforcement layer cross above (or alternatively below) a fraction (e.g. half or all) of the filaments a second reinforcement element and the rest of the filaments of the first reinforcement layer (e.g. approximately half) cross below (or alternatively above) a fraction (e.g. half or all) of the filaments of the second reinforcement element.

In one embodiment, the tensile reinforcement elements may advantageously consist of two groups of tensile reinforcement elements, each group comprising at least one tensile reinforcement element, and where the tensile reinforcement elements of one group have a winding angle which is opposite to the winding angle of the other group, the filaments of the elements from one group being interwoven with the filaments of the elements from the other group.

According to a given use where requirements are made with respect to mechanical impacts, chemical impacts, temperature conditions, etc. under which a given flexible pipe is to be used, expedient selections of material for use as tensile reinforcement elements according to the invention may advantageously be as stated in the claims, i.e. be made entirely or partly of a composite material, of an Fe-based alloy containing at least 50% Fe, of a Ti-based alloy containing at least 50% Ti, an aramide or an aramide-like polymer, or a linearized or spun polyethylene having an ultra-high molecular weight. The filaments may alternatively be made of carbon, glass, polyethylene, a metallic or ceramic material, etc.

In a preferred embodiment of the invention, where the filaments consist of a material comprising iron, the individual filaments are coated with another metal.

In a preferred embodiment, the pipe according to the invention also comprises an end termination.

When the tensile reinforcement is composed of tensile reinforcement elements which are formed by filaments held together, the tensile reinforcement is easy to prepare for embedding in a coupling unit provided in the end termination, which may e.g. be formed with a plurality of holes through which the filaments, the threads or the wires may be passed for moulding on the coupling unit.

To additionally ensure a strong attachment of the tensile reinforcement elements, a foreign member, which may e.g. be in the form of a wedge, may be inserted between the filaments. In this manner, an even better attachment after the moulding process will be ensured, as two or more filaments, threads, or wires (or the whole tensile reinforcement element) may be passed through a hole in the coupling unit, and when the foreign member is arranged between the filaments, the threads or the wires, they (or the whole tensile reinforcement element) cannot possibly be pulled back through the hole after moulding, cf. e.g. WO-A1-01/07818 which is incorporated herein by reference.

The invention will be explained more fully below with reference to the drawing, in which
fig. 1 shows a structure of a flexible pipe according to the invention, while
fig. 2 is an enlarged view of a portion of a flexible pipe with tensile reinforcement elements in another embodiment according to the invention.

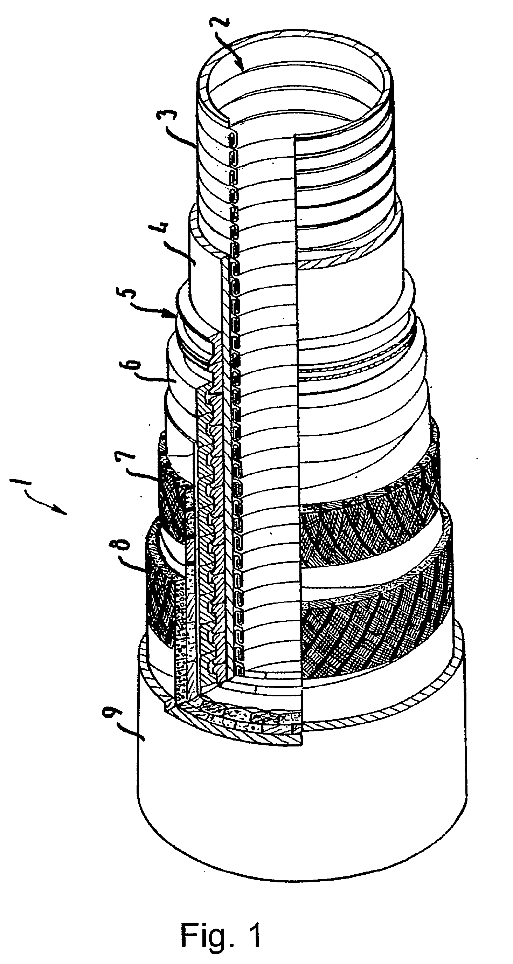

In fig. 1, the numeral 1 generally designates a flexible pipe which is suitable for offshore use in connection with the extraction of oil and gas.

The pipe has a duct 2 defined by a so-called carcass 3, which consists of profiled steel strips made by means of a carcass machine in which steel strips are profiled and subsequently wound to form the duct 2.

The carcass per se is not tight, and to prevent flow of fluid out of the duct 2 or into the duct from the surroundings, a tight inner liner 4 is arranged externally on it. The main purpose of the carcass is to protect the inner liner against collapse because of a pressure applied to it from the surroundings.

The inner liner has arranged externally thereon several reinforcement layers, including a pressure reinforcement 5, 6 which consists of assembled profiles, shown here as C-profiles. This pressure reinforcement, however, may also be composed of profiles of another type.

The pressure reinforcement has arranged externally thereon a tensile reinforcement 7, 8, which is arranged in two layers, as shown, where the pitch angle of the one layer is about 55° relative to the longitudinal axis of the pipe, and the pitch angle of the other layer is opposite, viz. -55° relative to the longitudinal axis of the pipe.

Finally, a protective jacket, here designated 9, is arranged externally on the outer tensile reinforcement layer.

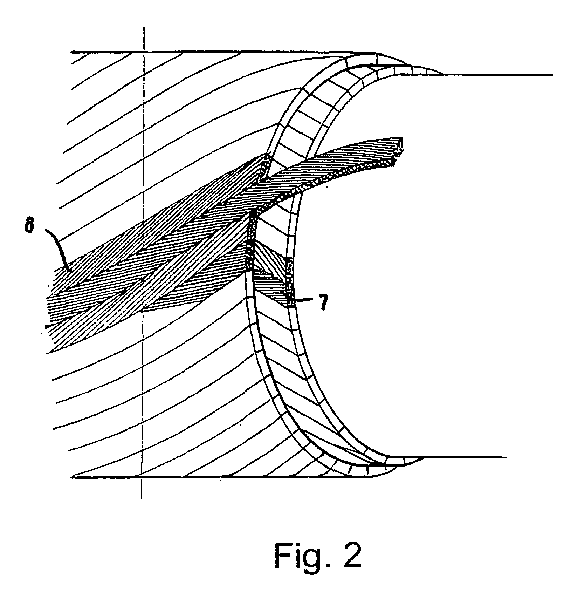

As will be seen in fig. 1, the tensile reinforcement elements 7, 8 consist of individual elements having the same geometrical shape, as is known from ordinary tensile reinforcement elements which are solid. In relation to this, the individual elements are made of filaments held together according to the invention, which may be woven into each other as shown in fig. 1, or be twisted together in a longitudinal direction as shown in fig. 2, so that the individual filaments are disposed side by side.

Other structures of the individual reinforcement elements than those shown in figs. 1 and 2 are conceivable.

In preferred embodiments of the invention, the filaments are held together by being braided, twisted, spun or entangled or the like to form a reinforcement element without the use of any binding materials (such as glue or thermoplastic, etc.) or retaining elements (such as a sheath or a thread or a tape, etc.) surrounding some or all of the filaments of the reinforcement element. In a further preferred embodiment of the invention, the individual reinforcement elements of a reinforcement layer are held together by interleaving without the use of any binding materials or retaining elements surrounding some or all of the reinforcement elements of the reinforcement layer in question.

In an embodiment of the invention, it is important that the individual tensile reinforcement elements are not woven or twisted into each other as a whole. However, the filaments from one reinforcement element may be woven into the elements from another reinforcement element, as is shown in figure 1. It should be noted, that each of the woven armouring layers (7 or 8 in fig. 1) comprise a number of reinforcement elements wound at an angle α to the longitudinal axis of the pipe (type A) and a number of crossing reinforcement elements wound at an angle -α to the longitudinal axis of the pipe (type B). In a cross section perpendicular to the longitudinal direction of the pipe, an armouring layer consists of two crossing layers, of type A and type B reinforcement elements, 'on top of each other' when viewed in a radial direction in this cross section, so that a type A element is outermost in one segment and a type B element is outermost in its neighbouring segment to each side (i.e. alternating when viewed in a peripheral direction). In fig. 1, it is only indicated that neighbouring segments have different cross sectional signatures alternating along the periphery of an armouring layer. The layered structure of each segment is, however, not indicated. The winding angle α may but need not be identical for the armouring layers (7, 8 in fig. 1).

The invention thus provides a pipe having a tensile reinforcement which, in addition to being more resistant to mechanical external impacts, also imparts greater mechanical flexibility to the flexible pipe, other things being equal. Moreover, the tensile reinforcement elements on the pipe according to the invention are more suitable for being assembled in end terminations,

## Claims

1. A flexible pipe (1) for use in the transport of fluids between installations above and/or below sea level, said pipe (1) comprising a tensile reinforcement wherein the tensile reinforcement comprises one or more tensile reinforcement layers (5, 6, 7, 8) and that at least one of the tensile reinforcement layers (5, 6, 7, 8) comprises one or more tensile reinforcement elements, and at least one of said tensile reinforcement elements consists of compound filaments, said tensile reinforcement element or elements being wound to form part of said tensile reinforcement layer (5,6,7,8).

2. A flexible pipe according to claim 1 wherein all the tensile reinforcement layers (5,6,7,8) are made of tensile reinforcement elements consisting of compound filaments, said tensile reinforcement elements being wound around the pipe to form independent tensile reinforcement layers (5,6,7,8).

3. A flexible pipe according to claim 1 or 2 wherein the filaments are held together without the use of binding materials.

4. A flexible pipe according to any one of claims 1-3 wherein the filaments are held together without the use of retaining means surrounding some or all of the filaments.

5. A flexible pipe according to any one of claims 1-4 wherein the tensile reinforcement element/elements are wound around the flexible pipe at an angle relative to the axis of the flexible pipe which is substantially identical in all the windings.

6. A flexible pipe according to any one of claims 1-5 wherein at least one tensile reinforcement layer (5, 6, 7, 8) comprises several tensile reinforcement elements, and that these tensile reinforcement elements are mechanically locked to each other.

7. A flexible pipe according to any one of claims 1-6 wherein the tensile reinforcement elements are made wholly or partly of a composite material.

8. A flexible pipe according to any one of claims 1-6 wherein the tensile reinforcement elements consist of an Fe-based alloy containing at least 50% Fe.

9. A flexible pipe according to any one of claims 1-6 wherein the tensile reinforcement elements consist of a Ti-based alloy containing at least 50% Ti.

10. A flexible pipe according to any one of claims 1-6 wherein the tensile reinforcement elements consist of an aramide or an aramide-like polymer.

11. A flexible pipe according to any one of claims 1-6 wherein the tensile reinforcement elements are made of a linearized polyethylene having an ultra-high molecular weight.

12. A flexible pipe according to any one of claims 1-11 wherein the pipe comprises an end termination in the form of a coupling unit, the individual tensile reinforcement elements of a tensile reinforcement layer (5, 6, 7, 8) being secured to the coupling unit by embedding of the tensile reinforcement elements in it.

13. A flexible pipe according to claim 12 wherein a splitting member is inserted between the filaments of the tensile reinforcement elements.

## Patentansprüche

1. Flexible Leitung (1) zur Verwendung beim Transport von Fluiden zwischen Einrichtungen über und/oder unter dem Meeresspiegel, mit einer Zugverstärkung, die eine oder mehrere Zugverstärkungslagen (5, 6, 7, 8) aufweist, von denen mindestens eine ein oder mehrere Zugverstärkungselemente enthält, von denen mindestens eines aus Verbund-Filamenten besteht und das bzw. die unter Bildung eines Teils der Zugverstärkungslage (5, 6, 7, 8) gewickelt ist bzw. sind.

2. Leitung nach Anspruch 1, wobei alle Zugverstärkungslagen (5, 6, 7, 8) aus Zugverstärkungselementen hergestellt sind, die aus Verbund-Filamenten bestehen und unter Bildung unabhängiger Zugverstärkungslagen (5, 6, 7, 8) um die Leitung gewickelt sind.

3. Leitung nach Anspruch 1 oder 2, wobei die Filamente ohne Verwendung von Bindemitteln zusammengehalten werden.

4. Leitung nach einem der Ansprüche 1 bis 3, wobei die Filamente ohne Verwendung einer Halteeinrichtung, die einige oder alle von ihnen umgibt, zusammengehalten werden.

5. Leitung nach einem der Ansprüche 1 bis 4, wobei das Zugverstärkungselement bzw. die Zugverstärkungselemente unter einem Winkel zur Achse der flexiblen Leitung um diese gewikkelt sind, der in allen Wicklungen im wesentlichen gleich ist.

6. Leitung nach einem der Ansprüche 1 bis 5, wobei mindestens eine Zugverstärkungslage (5, 6, 7, 8) einige Zugverstärkungselemente enthält und diese Zugverstärkungselemente mechanisch aneinander gekoppelt sind.

7. Leitung nach einem der Ansprüche 1 bis 6, wobei die Zugverstärkungselemente ganz oder teilweise aus einem Verbundmaterial hergestellt sind.

8. Leitung nach einem der Ansprüche 1 bis 6, wobei die Zugverstärkungselemente aus einer Legierung auf Fe-Basis bestehen, die mindestens 50% Fe enthält.

9. Leitung nach einem der Ansprüche 1 bis 6, wobei die Zugverstärkungselemente aus einer Legierung auf Ti-Basis bestehen, die mindestens 50% Ti enthält.

10. Leitung nach einem der Ansprüche 1 bis 6, wobei die Zugverstärkungselemente aus einem Aramid oder einem Aramidhaltigen Polymer bestehen.

11. Leitung nach einem der Ansprüche 1 bis 6, wobei die Zugverstärkungselemente aus linearisiertem Polyethylen mit ultrahohem Molekulargewicht hergestellt sind.

12. Leitung nach einem der Ansprüche 1 bis 11, die einen Endabschluß in Form einer Verbindungseinheit aufweist, wobei die einzelnen Zugverstärkungselemente einer Zugverstärkungslage (5, 6, 7, 8) mit der Verbindungseinheit verbunden sind, indem sie in ihr eingebettet sind.

13. Leitung nach Anspruch 12, wobei zwischen den Filamenten der Zugverstärkungselemente ein Trennelement eingefügt ist.

## Revendications

1. Conduite flexible (1) destinée à être utilisée dans le transport de fluides entre des installations au dessus et/ou en dessous du niveau de la mer, ladite conduite (1) comprenant une armature de traction dans laquelle l'armature de traction comprend une ou plusieurs couches (5, 6, 7, 8) d'armature de traction et qu'au moins une des couches (5, 6, 7, 8) d'armature de traction comprend un ou plusieurs éléments d'armature de traction, et au moins un desdits éléments d'armature de traction est constitué de filaments composés, ledit ou lesdits éléments d'armature de traction étant enroulé(s) pour faire partie de ladite couche (5, 6, 7, 8) d'armature de traction.

2. Conduite flexible selon la revendication 1 dans laquelle toutes les couches (5, 6, 7, 8) d'armature de traction sont faites d'éléments d'armature de traction constitués de filaments composés, lesdits éléments d'armature de traction étant enroulés autour de la conduite pour former des couches (5, 6, 7, 8) indépendantes d'armature de traction.

3. Conduite flexible selon la revendication 1 ou 2 dans laquelle les filaments sont tenus ensemble sans l'utilisation de matériaux de liaison.

4. Conduite flexible selon l'une quelconque des revendications 1 à 3 dans laquelle les filaments sont tenus ensemble sans l'utilisation du moyen de retenue entourant certains ou la totalité des filaments.

5. Conduite flexible selon l'une quelconque des revendications 1 à 4 dans laquelle le(s) élément/éléments à armature de traction sont enroulés autour de la conduite flexible au niveau d'un angle par rapport à l'axe de la conduite flexible qui est sensiblement identique dans tous les bobinages.

6. Conduite flexible selon l'une quelconque des revendications 1 à 5 dans laquelle au moins une couche (5, 6, 7, 8) à armature de traction comprend plusieurs éléments à armature de traction, et où ces éléments à armature de traction sont verrouillés de manière mécanique les uns avec les autres.

7. Conduite flexible selon l'une quelconque des revendications 1 à 6 dans laquelle les éléments à armature de traction sont faits en totalité ou en partie d'un matériau composite.

8. Conduite flexible selon l'une quelconque des revendications 1 à 6 dans laquelle les éléments à armature de traction sont constitués d'un alliage à base de Fe contenant au moins 50 % de Fe.

9. Conduite flexible selon l'une quelconque des revendications 1 à 6 dans laquelle les éléments à armature de traction sont constitués d'un alliage à base de Ti contenant au moins 50 % de Ti.

10. Conduite flexible selon l'une quelconque des revendications 1 à 6 dans laquelle les éléments à armature de traction sont constitués d'une aramide ou d'un polymère ressemblant à une aramide.

11. Conduite flexible selon l'une quelconque des revendications 1 à 6 dans laquelle les éléments à armature de traction sont faits d'un polyéthylène linéaire ayant un poids moléculaire ultra léger.

12. Conduite flexible selon l'une quelconque des revendications 1 à 11 dans laquelle la conduite comprend un raccordement d'extrémité sous la forme d'une unité de couplage, les éléments individuels à armature de traction d'une couche (5, 6, 7, 8) à armature de traction étant fixés à l'unité de couplage en incorporant les éléments à armature de traction dans celle-ci.

13. Conduite flexible selon la revendication 12 dans laquelle un élément de séparation est inséré entre les filaments des éléments à armature de traction.
